# EUROPEAN PATENT APPLICATION

(11) **EP 1 128 299 A1**
(43) Date of publication of application: **29.08.2001**
(21) Application number: 00304923.6
(22) Date of filing: 09.06.2000
(51) Int. Cl.: G06F 17/60

(54) **Monitoring, assessing, and improving performance of cost centers**

(30) Priority: 25.02.2000 US 513095
(71) Applicant: Lehigh Valley Health Network, Allentown, PA 18105-1556 (US)
(72) Inventor: Jagiela, Steven W., Slatington, PA 18080 (US); Helfrich, Douglas J., Emmaus, PA 18049 (US); Guidi, Marilyn, Phillipsburg, NJ 08865 (US)
(74) Representative: W.P. Thompson & Co.

(57) **Abstract**

A computer-based method and system for monitoring the performance of a cost center of an enterprise. Updated raw performance data related to the performance efficiency and quality, respectively, of the cost center, is collected for each of a plurality of consecutive reporting periods. A scorecard report is generated, for each reporting period, based on the raw data for said each reporting period, said scorecard report containing interrelated, quantitative efficiency and quality performance measures indicative of the performance of the cost center, in terms of both efficiency and quality, during the most recent reporting period, said scorecard report further providing at least one benchmark performance measure for each of said performance measures for comparison to the respective performance measure.

## Description

### BACKGROUND OF THE INVENTION

### Field of the Invention

The invention disclosed in this provisional patent application relates to methods and systems for monitoring and assessing performance of cost centers.

### Description of the Related Art

Entities such as enterprises and businesses typically have various goals. These include making or maximizing profit (or, for non-profit entities, net margin), satisfying customers (members), producing products, minimizing cost, and the like. Such entities are typically organized by departments or cost centers, where each cost center itself has such goals. In each cost center, there are various resources employed and employees performing various functions. For example, in a hospital, the employees include nurses, clerical staff, and the like. Thus, the resources, including human capital, must be organized in a certain fashion, in order to realize various goals. Any entity containing cost centers may be referred to herein generally as an enterprise.

In order to achieve the cost center's goals, it is necessary to organize the cost center, and then monitor its progress to ensure it is achieving the goals as efficiently as possible. If not, organizational changes can be made in an attempt to improve performance. Meaningful information is necessary so that the manager can assess and take steps to improve performance in the future.

For example, staffing patterns and other ways of organizing the cost center must be selected, which can help to develop a budget expected for the proposed organization and staffing pattern. Once a given staffing pattern and organization is implemented, it is desirable to be able to monitor the performance of the cost center. A hospital, e.g., is in the business of providing medical services to patients. To do this each of its various cost centers hires a variety of types of employees, and structures the organization of employees and resources, in accordance with the portion of the overall budget allocated to the cost center.

It can be difficult to efficiently organize the cost center or to accurately monitor its progress, or to determine how proposed changes in organization will affect various indicia of success or performance, such as profitability. This is because traditional techniques for providing data to managers is static and transaction-based. Information management systems and measurement programs have historically addressed performance tracking through traditional financial measures. For example, it may be important for a business to lower cost and increase or maintain performance quality and customer satisfaction. However, the specific measures for cost management, performance quality, and customer satisfaction have traditionally been viewed as independent measures.

Access to timely, interrelated data has been restricted by traditional paper-based accounting reports and transaction-oriented systems. In many cases, decisions to improve performance in any one of these key indicators may negatively affect the others, without the decision-maker even being aware of the impact of their actions. A decision to increase quality, for example, may result in unexpected and unacceptable increases in cost. Or, an organizational change designed to improve customer satisfaction may yield only minimal customer satisfaction improvement with an unacceptable detrimental effect on various cost-related operational ratios. Thus, transaction-based reports provide insufficient data to allow managers of cost centers to adequately assess performance and take steps to improve performance.

In addition, such transactional data (e.g., operating and financial information) is typically provided only on a monthly basis. However, the relevant recurring time period in terms of planning or decision-making for a typical cost center manager may be much more frequent, e.g. the manager may need to change staffing patterns biweekly, weekly, or even daily. Even worse, transactional data is also typically provided a significant time after the close of the most recent period, e.g. three weeks following the close of the month, and is provided from several separate sources in a variety of different formats. Such data bears no specific relation to the department's unit of service, or primary workload indicator. The data typically reflects useless, static, out-of-date, too-frequently-updated logs of budget data and financial accounting information, not actionable information, i.e. not information that permits the manager to assess various indicia performance of the cost center and to use this information to make informed decisions to improve performance.

Thus, managers tend to employ an unsystematic, uninformed, "hope-for-the-best" management approach in the face of daunting system complexity and disintegration, which results in uncounted dollars being lost every year.

### SUMMARY

A computer-based method and system for monitoring the performance of a cost center of an enterprise. Updated raw performance data related to the performance efficiency and quality, respectively, of the cost center, is collected for each of a plurality of consecutive reporting periods. A scorecard report is generated, for each reporting period, based on the raw data for said each reporting period, said scorecard report containing interrelated, quantitative efficiency and quality performance measures indicative of the performance of the cost center, in terms of both efficiency and quality, during the most recent reporting period, said scorecard report further providing at least one benchmark performance measure for each of said performance measures for comparison to the respective performance measure.

### BRIEF DESCRIPTION OF THE DRAWINGS

These and other features, aspects, and advantages of the present invention will become more fully apparent from the following description, appended claims, and accompanying drawings in which:
Fig. 1 is an illustrative main scorecard form initially displayed when the balanced scorecard application is opened;
Fig. 2 is a secondary scorecard form showing details of the Operating Ratios section of the main display of Fig. 1;
Fig. 3 is an exemplary trend graph illustrating the hours worked per patient day trend for a sample inpatient nursing unit over a three-year period;
Fig. 4 is an exemplary tabular chronology display for Operating Ratios;
Fig. 5 is a skill mix display showing a person's profile with information displayed by skill mix;
Fig. 6 is an illustrative main facility-level scorecard form;
Fig. 7 is an illustrative Summary scorecard showing multiple departmental scorecard values in a single display;
Fig. 8 is a flow chart showing the navigation paths available in an embodiment of the scorecard performance assessment system of the present invention;
Fig. 9 is a chart showing a preferred navigation scheme in an embodiment of the scorecard performance assessment system of the present invention;
Fig. 10 is a schematic diagram of a computer system for implementing the scorecard performance assessment system of the present invention;
Fig. 11 is an exemplary Input Worksheet of a Labor Budget Worksheet tool for budgeting assistance using the balanced scorecard system of the present invention;
Fig. 12 is an exemplary Staffing Pattern Sheet of the Labor Budget Worksheet tool; and
Fig. 13 is an exemplary Summary Sheet of the Labor Budget Worksheet tool.

### DETAILED DESCRIPTION OF THE INVENTION

As noted above, access to timely, interrelated data has been restricted by traditional paper-based accounting reports and transaction-oriented systems. An object of the present invention is to provide managers with a tool that presents clear, concise, timely, and easily-accessible information indicative of the performance of the cost center. This information is in the form of a "balanced scorecard", i.e. formatted data indicative of a plurality of interrelated quantitative performance measures or criteria. Provision of such information improves the manager's ability to manage workload variability at the relevant business unit level―e.g. department or cost center-and improve operations on an ongoing basis. In an embodiment, the balanced scorecard encompasses cost-related data, such as cost-related operational ratios, member satisfaction, and quality measures. The present invention is a computer-based scorecard system which collects raw data and provides, on a regular, timely basis, meaningful and useable balanced scorecard information that indicates the performance of the cost center in a variety of interrelated performance criteria.

In an embodiment, the scorecard of the present invention is configured based on the same perspective relevant to the decision-making of the department manager, i.e. on a daily or weekly, updated basis, so that the information is relevant for routine changes in cost center organization such as staffing patterns, which typically occur on a daily, weekly, or biweekly basis, as opposed to intervals such as monthly or fiscal year which are not related to or not ideal for the managerial unit of decision-making time. An objective and advantage of the balanced scorecard system of the present invention is to integrate operations improvement, performance improvement, benchmarking, and budget into day-to-day department management, ensuring that all measures are balanced as the organization works towards its goals. The various interrelated performance measures are "balanced" in the sense that all measures are provided together and in such as way, along with logs and tracking, to provide the manager with the ability to make organization changes to improve one of the performance measures while at least being aware of likely affects of such changes on the other, interrelated measures.

Thus, the present invention provides an automated, computer-implemented system which can be used to help organize and track the performance, in terms of goals, of a cost center. The cost center must first be organized, and then, once organized, monitored and continually adjusted in pursuit greater performance and results.

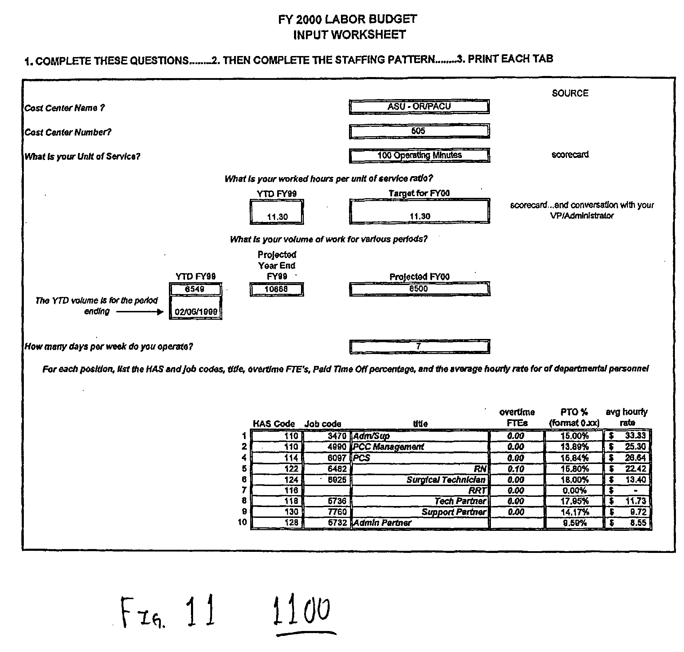

The cost center is organized by generating information such as expected targets, for a given staffing pattem and budgetary constraints. Then, once the cost center is implemented following a given staffing pattern, regular reports are generated that provide information to assess the cost center's performance with respect to the target expectations. The first phase be referred to as the organizational phase or the target expectation generating phase. The second phase may be referred to as the monitoring or "scorecard" phase. The present invention is preferably implemented as a computer program running on a computer, such as a general-purpose programmable personal computer (PC), e.g. as illustrated in Fig. 10. The computer-based balanced scorecard system 1000 of Fig. 10 contains, for example, PC 1010, which contains processor 1011 for running applications, and memory 1012, which may comprise RAM, ROM, CD-ROM, hard disk drive, and the like. PC 1010 receives input data, and may provide output data on devices such as monitor 1021 or printer 1022.

### Organizational Phase

In the organizational phase, a staffing pattern is selected to accomplish a given set of goals. For example, in a given cost center of a hospital, the employees may include nurses, clerical staff, and the like. There is a need to be able to develop the cost center's organization, e.g. the staffing pattern and budget, and performance criteria such as expectation targets which can be used to evaluate the cost center's performance and accomplishment of various goals. For example, given a certain goal, such as the manufacture of 1000 widgets in a year, or the servicing of a certain expected number of patients, and the like, the cost center manager needs to know how many employees of what types are needed, and the like, in order to develop an organizational plan for the cost center. In addition to determining the necessary budget, it is desirable to know how many people and also what type what the labor expense is for the entire cost center.

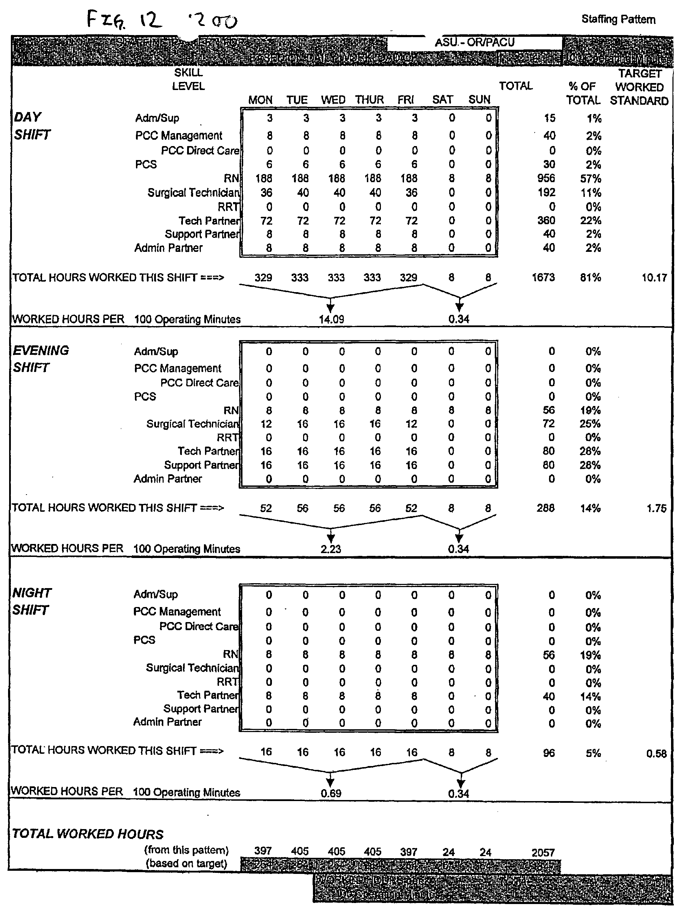

In an embodiment of the present invention, inputs provided are the volume of work expected to be done for the next fiscal period; the work hours per unit of service; the days of operation per week; the titles and skill levels and average hourly rates of every employee in the cost center. This may be referred to as a Labor Budget Worksheet, as described in more detail below with reference to Figs. 11-13. Such information is provided after a planned staffing pattern is developed (the staffing pattern to be used to handle that workload to accomplish the goals). For example, a staffing pattern for a given cost center which has a given function or goals, may specify that a director, a worker and a clerk are required, where on Mondays eight hours of the director is required, four hours of the worker is required, and four hours of the clerk is required. Such a staffing pattern is specified for each day and also by shift. This staffing pattern, or matrix, is completed.

Given this input information, the present invention then calculates: the total work FTE (full time equivalent) requirement; the paid FTE requirement; the labor expense requirement; and two "expectation targets", namely work hours per unit of service and labor expense per unit of service. Thus, using this information for various staffing patterns, one can, in advance of the beginning of a fiscal period, know what the expectation of performance is. This provides a clear and consistent methodology for developing these targets in advance of the fiscal period.

### Scorecard Phase

Once an initial set of targets and staffing pattern is developed for the cost center, it is implemented. Thereafter, the present invention provides a way to regularly monitor the performance, in terms of a plurality of important, interrelated criteria, against the targets, for ongoing operations. This scorecard technique allows one to monitor the performance of the cost center, in terms of a plurality of interrelated, yet distinct, quantitative performance measures.

In one embodiment, the scorecard program is run regularly, for example every two weeks (e.g. each biweekly pay period), to generate a report which reveals how the cost center is performing against certain quantitative targets, in terms of the relevant performance criteria or measures. The report can be used to provide information such as worked hours per unit of service and labor expense per unit of service, as compared to the expectation targets determined in a previous phase or in accordance with some other technique or model, as well as non-wage expense per unit of service and other information such as ratios such as worked hours as a percent of total paid hours. The information may be provided in various convenient formats, such as graphical or tabular format. The cost center information related to cost is typically provided in the form of rations, such as dollars per unit, and may thus be referred to herein as operational ratios. The present invention also generates other performance criteria information, e.g. related to cost center performance and customer satisfaction scores.

The reports generated by the present invention allow one to see on a pay period-by-pay period basis how the cost center is doing against the worked hours per unit of service expectation, the labor expense per unit of service expectation, the non-wage expense per unit of service expectation, and the like. This allows productivity and performance of the cost center to be quantitatively assessed (e.g., by the cost center manager), so that informed decisions can be made in deciding how to adjust the staffing pattern, resource consumption, budget, and/or targets, and the like. Economists have long noted the essential role of quantitative, comparable units (such as money prices) in entrepreneurship. Such quantitative comparisons can be used both in making plans for the future and in evaluating the success of past actions, entrepreneurial decisions, business plans, and the like. See, e.g., Ludwig von Mises, *Human Action,* 3d rev. ed., Chicago: H. Regnery (1966) <http://www.mises.org/humanaction.asp>, esp. chs. XI, §§ 3-4 (pp. 206-211), XII, § 1 (pp. 212-214), XIII, § 1 (pp. 229-230), XVI, §§ 1-4 (pp. 327-350), and XXVI, § 1 (pp. 698-701); Joseph T. Salerno, "Mises and Hayek Dehomogenized," *Review of Austrian Economics* vol. 6, no. 2 (1993): pp. 113-146 <http://www.qjae.org/journals/rae/pdf/R62_5.pdf>; Jeffrey M. Herbener, "Calculation and the Question of Arithmetic," *Review of Austrian Economics* vol. 9, no. 2 (1996): 151-162 <http://www.qjae.org/journals/rae/pdf/R91_9.pdf>.

In producing the cost-related operational ratios, the present invention ties volume together with the labor consumed and the non-wage expense consumed for that volume of work. The program combines this information with quality scores and customer satisfaction scores in one place at one time, for analysis by a cost center manager. Thus, the present invention generates a biweekly, balanced scorecard which contains operational ratios, quality measures, and customer satisfaction measures. This permits the cost center manager to see the impact of what the cost center is doing from a financial point of view in terms of labor expense per unit of service and also to see what the quality and customer satisfaction has been for this similar period. The non-cost related performance measures such as quality and customer satisfaction are interrelated in that organization changes made to improve one measure tend to affect the others. However, the various performance measures selected for generation and display on the balanced scorecard may or may not be related in other ways. For example, cost-related operational ratios, quality of service, and customer satisfaction may be selected as relevant performance measures because each influences the success of the cost center in terms of profit or net margin. Alternatively, a cost measure may be monitored and taken into account with the present invention even if it does not appear to have a direct bearing on profit; e.g., patient safety, ethics, quality, employee satisfaction, and the like may be valued independently of their contribution to the bottom line.

As an example of the utility of providing a balanced scorecard containing a plurality of interrelated, quantitative performance measures, the quality indicators provided can indicate the number of missed medications, lost specimens, customer wait time, and the like. The cost center manager can tie the cost, quality, and satisfaction measures together through use of the balanced scorecard. This provides a consistent, simple, and timely method for linking functional level measurement to organizational goals, and provides a way to integrate bench marking operations improvement, process improvement, and budget into the day-to-day running of a business or cost center.

Thus, the present invention provides a means to more accurately and efficiently derive various labor targets in advance of the beginning of the fiscal period (organizational phase), as well as a means to measure and monitor progress against those targets throughout the entire fiscal period (organization, scorecard phase). This is done by combining the expected volume of work along with a work standard and a non-wage expense standard and a labor expense standard and deriving the total budget for the cost center and then monitoring progress against those targets on a pay period basis.

### System Principles and Considerations

As noted above, in conventional information management systems, managers are not provided timely, meaningful, integrated data on which to base their decisions. The present invention improves the manager's ability to adjust resource consumption to meet fluctuations in demand, and permits the cost center manager to continue to reduce costs while remaining a high quality service, via continuous measurement and benchmarking quality strategies.

In an embodiment, the present invention provides an on-line, integrated reporting tool that allows managers to analyze cost, quality, and satisfaction data on a biweekly basis. The system collects the relevant raw data, and generates therefrom a balanced scorecard to provide information on a more timely basis than the traditional financial reporting system and presents key indicators via operational ratios that are based on a department's specific unit of service, or primary workload indicator. The scorecard offers a tracking tool to benchmark against various targets, such as overall industry best practice, a department's best previous performance, and historical performance.

Moreover, as described in further detail below, incorporation of a "Labor Budget Worksheet" into the scorecard allows the manager to develop a labor budget using external benchmarks, as well as recent performance trends for their area of responsibility. Operational ratio targets are set using this component of the scorecard, providing a coordinated approach for decision support. This internally-developed tool offers on-line decision support and trending information by pulling data maintained in the organization's Payroll, Materials Management, Customer Service and Quality databases. Managers can access performance trends for their business units, while senior managers are presented with rolled-up scorecards within each division.

The term "scorecard" is used to indicate that managers are provided with a periodic report containing useful quantitative information concerning the performance or success of the cost center, in terms of a plurality of quantitative performance measures. Below is provided and explanation of the design principles of the present invention, in terms of an analogy to sports. The sports analogy and metaphor employed herein is used to help explain various concepts of the present invention.

### Relevant Scores

First, a plurality of performance criteria are selected by considering what matters most to the overall success or goals of the cost center or overarching business entity. In sports, by analogy, statistics are recorded and tracked for almost every imaginable aspect of a sports activity. An individual baseball player's batting average for day games versus night games is just one example of these seemingly countless statistics. Business entities, such as hospital departments, also keep an abundance of measures. However, while recording various statistics, it is imperative not to lose sight of the most important measures. Thus, in sports the "official" scorecard only records the "score" and other direct contributors to the score. Similarly, only information relevant to what is considered to be success for the entity, is provided.

### Time Dimension

Every sports activity has a time dimension, whether explicit, such as 15-minute quarters in football, or implicit, such as an inning in a baseball game. A score is also recorded for each time dimension within the complete game. Just as with a sporting activity, the balanced scorecard system of the present invention is organized so that it reflect multiple time periods and measurements for each relevant time period. In an embodiment, these time periods are selected based on the time periods that reflect how a manager makes decisions. Thus, if a manager makes staffing pattern decisions on a biweekly basis, biweekly balanced scorecards can be useful in helping to improve these staffing pattern allocations and changes.

### Timely Reporting

Measurement of the most important statistics during a sports activity is recorded "as it happens." For example, a run is posted immediately following a baseball player's touching of home plate. The objective of the balanced scorecard system is likewise to provide information as soon as possible.

### Balance of Measures

In addition to the score―e.g., runs in baseball, points in football―other measures that can contribute to or otherwise are related to the score are also typically recorded for sporting events. For example, hits and errors are recorded in baseball, and individual and team fouls are kept in basketball. Errors and fouls may be viewed as examples of "quality" measures in sports activities. In the present invention, a cost center performance scorecard is provided to managers, which provides multiple types of measures that are dynamically interrelated, which provides a "balance" to the scorecard.

### Comparison of Scores to Benchmarks

A player in a sports activity typically has an opponent. Thus, the comparison of a player's and his opponent's scores may determine outcome of the event. In some cases, the "opponent" may be a target, such as par in golf. The balanced scorecard of the present invention provides relevant, quantitative performance measures, as well as comparisons of these measures to various relevant benchmarks. For example, benchmarks may be selected based on similar performance in peer facilities. The benchmarks may show, for example, the upper 25th, 50th, and 75th percentile performance in various operational ratios for peer facilities. The benchmarks may include a target selected based on such information and/or past performance. Another benchmark that might be included is a "best" measure, indicating the best such measure achieved so far by this (or another) cost center in a relevant time frame. For example, if a current scorecard indicates acceptable quality and satisfaction measures and operational ratios at the 75th percentile compared to the operational ratio benchmarks, the department manager or other managers may decide that a target operational ratio is the 50th percentile. The department manager may then take steps to attempt to improve cost ratios to meet this target, without unacceptably affecting the other performance measures. Subsequent balanced scorecards can indicate how successful this action was, and can thus be used for further organizational changes in an attempt to better meet the current targets.

### Central Focus

An official sports scorecard provides all of the above information in one place. An extension of the official scorecard is the scoreboard in a stadium, arena, or field house. Virtually every important aspect of the sporting activity critical to the outcome-the scores of two teams, time elapsed and/or remaining, and other interrelated measures-is provided through this central record.

### Influence on Subsequent Actions

The score, time remaining, and other situational aspects during the course of a sports activity affect how the game is played at any particular moment. For example, kicking a field goal is a more likely choice when a football team is behind by two points than it is when trailing by six points with only one minute to play. In the present invention, the balanced scorecard is designed so as to present "actionable" information, i.e. information that is more directly relevant to decisions. The balanced scorecard system of the present invention is thus a decision-support system, unlike conventional, systems which provide only static, transaction-based data to managers.

### Interest to Indirect Participants

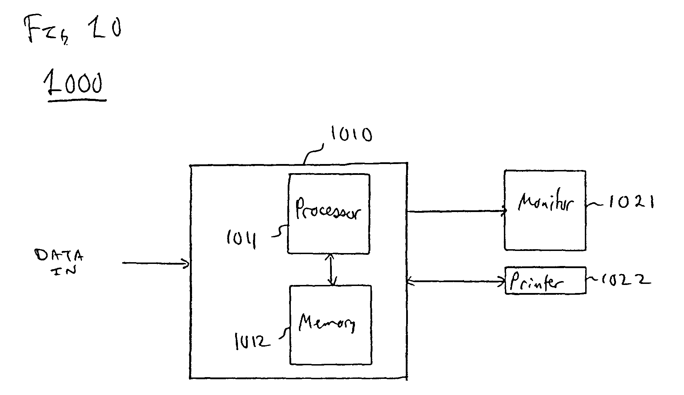

The continual measurement and outcome of a sports activity is of interest to more than just the team or individual players. In addition to direct participants, coaches, owners, and spectators are also interested in the progression and outcome of the game. The balanced scorecard of the present invention is made available to the department manager, internal peer coaches helping a particular department manager, and other managers in the chain of command. Other managers or personnel in the overall business organization may also need access to one or more departmental scorecards. For example, as described in further detail below with reference to Fig. 9, the Chief Operating Officer may need to have access to all departmental scorecards.

To develop an interactive, PC-based scorecard system, the foregoing system principles and considerations may be used to design a "paper" prototype, which may be reviewed by various managers, programmers, and the like. The paper prototype can be used to design a computer-based mockup version, an operational pilot version, and then finally a fully operational PC-based application deployed to all managers in the enterprise, e.g. the manager of every cost center or department, as well as other managers or personnel at hierarchically different positions within the enterprise, e.g. "intermediate" managers such as division managers and senior management.

### Computer-Based Balanced Scorecard System

Each cost center is provided with a PC-based balanced scorecard system. In an embodiment, the balanced scorecard application is a MICROSOFT® Access™ database application, locally installed on a given manager's PC. Appendix 1, attached hereto, is a listing of a MICROSOFT® Access™ database application providing an illustration of data structures used to implement an embodiment of the scorecard aspect of the invention. Alternative languages may also be employed in encoding this and other aspects of a program for implementing the present invention.

In an embodiment, the balanced scorecard system contains a PC-based application integrating three general performance measures: cost-related operational ratios, quality indicators, and member/customer satisfaction measures. One object of this system is to develop operational ratio targets, which are the basis of the departmental budget. Another object is to update these measures on a regular (e.g., weekly or biweekly) basis, thus tracking actual performance against these performance targets. By contrast, in transaction-based systems, financial reports are typically delivered the third week of the following month.

In an embodiment, the update frequency of the scorecard is determined by the recording of employee attendance data in a given organization. For a hospital, for example, employee attendance data may be captured through its automated payroll system, producing employee paychecks and attendance records on a biweekly basis. By focusing on the most important indicators of performance provided on a more timely basis, the manager can move swiftly to detect difficulties and take appropriate action. This allows the manager to move towards prevention and proactive strategies to truly manage performance.

### Scorecard Main Page

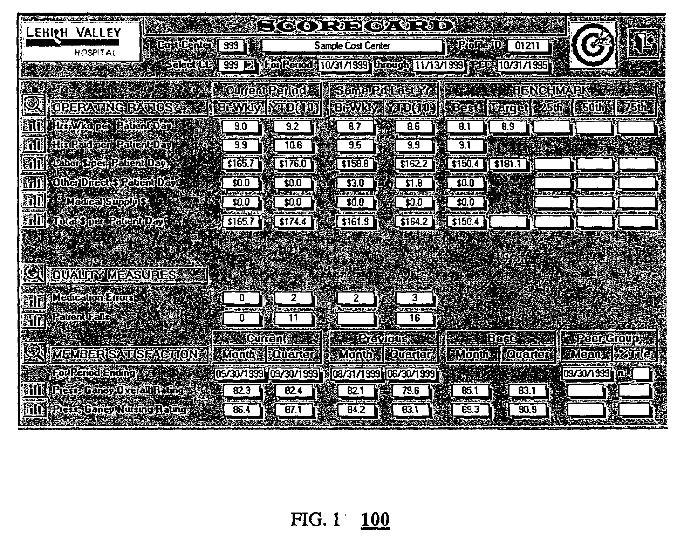

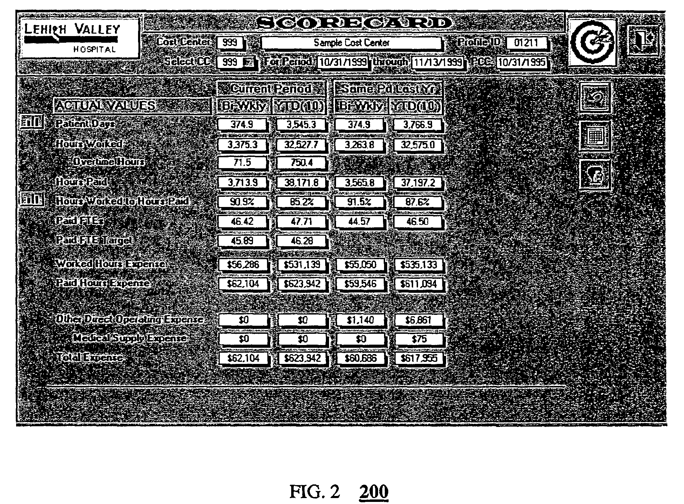

Referring now to Fig. 1, there is shown a main scorecard form 100 initially displayed when the balanced scorecard application is opened. When a manager opens the balanced scorecard application running on PC 1010 (Fig. 10), a main scorecard form 100 is automatically displayed on the monitor 1021. The main display 100 shows information in four major sections: Header, Operational Ratios, Quality Measures, and Member (customer) Satisfaction. The Header section displays the department or cost center for which the scorecard applies ("Sample Cost Center" 999 in this example), and the latest biweekly period for which data is provided. In addition, as described in further detail below with reference to Fig. 9, a manager having responsibility for more than one department, or otherwise having access to other departments, can select another department using a pull-down option in the header section. Normally all of the fields would have data displayed therein; however, for ease of illustration some fields are not shown with any numerical data in Fig. 1 or other sample displays in Figs. 2-7.

The Operating Ratios section shows various measures, all of which are a representation of the amount of resources consumed to produce a single unit of product/service (work), as defined by the given department For a hospital, for example, the unit of work may be defined as a patient visit, a procedure, or a patient day. Resources consumed are expressed as hours worked, hours paid, labor expense, non-labor expense, and total expense. The amount of resource used is divided by the volume of work to reflect operating ratios for a given period of time. These operating ratios are preferably consistent among all departments, units, and cost centers. This consistency permits sharing of trending information and related experiences among department managers, for example.

The Quality Measures section shows specifically-defined indicators of how effective a product or service is being provided to a customer. Some examples of quality indicators are the percentage of x-ray retakes, the number of medication errors per doses distributed, and the percentage of patients leaving the Emergency Room before being seen by a physician. Quality indicators may vary among departments, with each department manager defining the indicators most important to monitor and keep in balance with operating ratios.

The Member Satisfaction section shows defined indicators of patient, customer, employee, and physician feedback related to customer or member subjective satisfaction with the product or service provided by a given department. Some examples of satisfaction measures are specific survey scores from patients as external customers and internal customers, such as inpatient nursing unit staff for the Pharmacy Department, or surgeons for the Operating Room. Standard patient questionnaires provided by an outside research company may be used to record external customer satisfaction measures. Department managers can select specific indicators from the standard patient survey for inclusion in their individual scorecards. A standard survey is used to record feedback from internal customers. These indicators are used consistently across departments for functions having internal rather than external customers. In addition, employee turnover and absenteeism rates are consistently included on the scorecard for all departments as an indicator of employee satisfaction.

Each of the three sections involving measures―Operating Ratios, Quality Measures, and Member Satisfaction-has values for multiple time periods, e.g. biweekly and year-to-date (YTD). This allows for comparison of performance between time periods, such as current period performance versus previous period performance. In addition, depending on the section, comparisons can be made against target values, the department's best values, and peer department or facility values, as noted above.

### Scorecard Navigation & Sub Displays

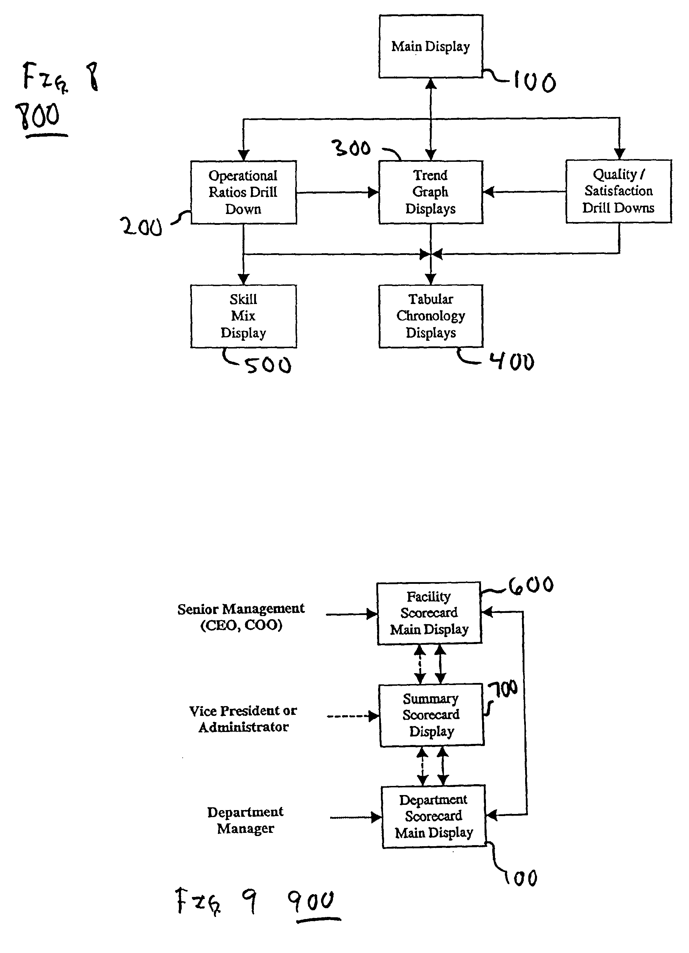

In an embodiment, the balanced scorecard application is run on a PC and may be operated by using a PC mouse and "point and click" actions. The scorecard application incorporates common decision support system navigation techniques, including drill-down capabilities. A department manager navigates through the available displays entirely by pointing the mouse cursor and clicking on identified "buttons". Referring now to Fig. 8, there is shown a flow chart illustrating the navigation paths available in an embodiment of the scorecard performance assessment system of the present invention. The "sub displays" (i.e., those below main display 100 in Fig. 8) allow navigation back to the main scorecard display 100 by pointing and clicking on its return arrow button.

Clicking on one of the magnifying glass buttons associated with a major section of the main scorecard 100 will display a secondary display, or drill down, showing more detailed information. Fig. 2 is a secondary scorecard form 200 showing details of the Operating Ratios section of the main display 100. The Operating Ratios drill down display 200 shows all of the details behind the operating ratio values, including the unit of service volume, hours worked and paid, paid Full Time Equivalent (FTE) employees, and specific expense categories. The drill-down displays for the Quality Measures and Member Satisfaction show not only additional details for the measures included on the main page 100, but also any additional measures specifically identified for the given department. Although a basic premise of the balanced scorecard is to highlight what is most important, its design allows for an unlimited number of quality or satisfaction measures.

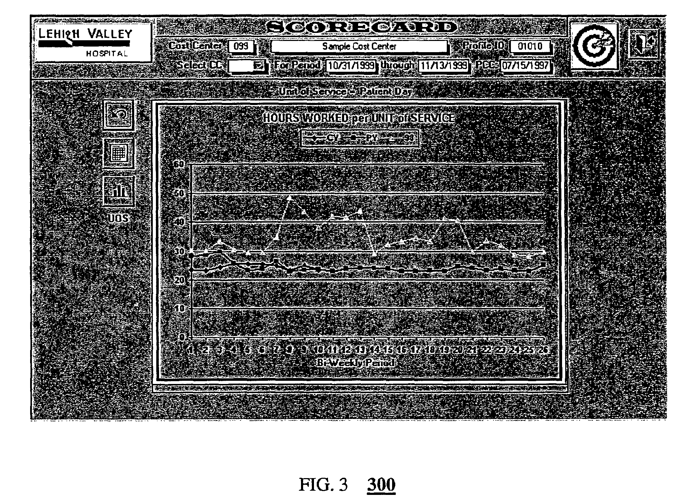

From any of the drill-down displays, e.g. 200, or the main scorecard display 100, various trend graph displays can be selected as indicated by a graph button next to a displayed measure. Each graph shows the values of the selected measure over time, based on the amount of data recorded and stored for that measure. Fig. 3 contains a trend graph 300 illustrating the hours worked per patient day trend for a sample inpatient nursing unit over a three-year period. Pointing and clicking on any graphical button on any of the scorecard displays (e.g., 100, 200) will automatically show a graphical representation similar to trend graph 300 of Fig. 3, except the x-axis and the measure graphed will be different. In addition to operating ratios and performance measures, trends of volume, or unit of service, statistics can be displayed for biweekly periods, or the latest 28-day period.

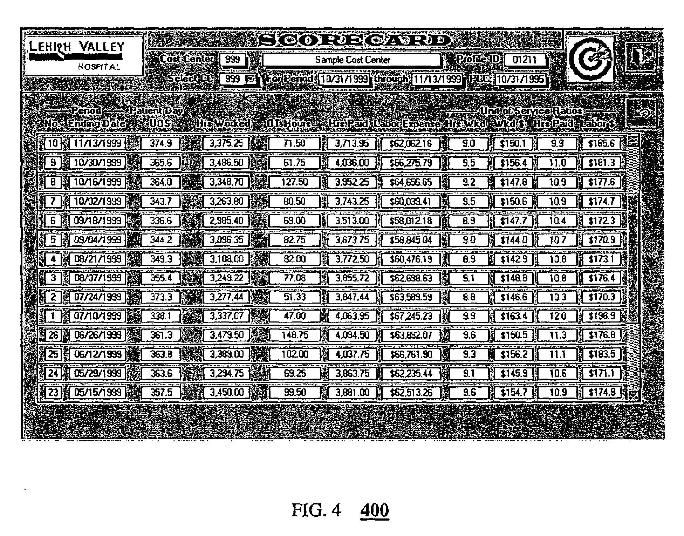

Any scorecard display having a calendar button allows the user to point and click on this button to navigate to a tabular display of information in chronological order. In an embodiment, there is a tabular chronology display available for each of the major performance measures: Operating Ratios, Quality Measures, and Member Satisfaction. Fig. 4 shows an exemplary tabular chronology display 400 for Operating Ratios. This detailed display 400 shows a full year's worth of information with the most recent data shown at the top, and an ability to scroll to show prior period data. In an embodiment, such tabular information displays can only be reached from a drill-down or trend graph display.

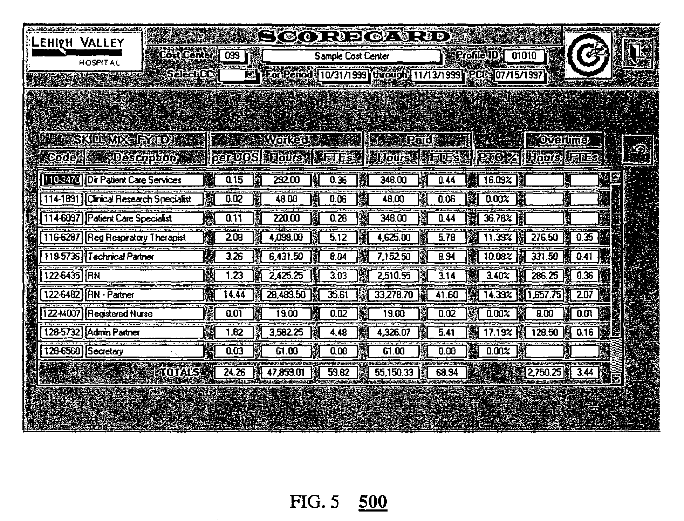

An additional display is available from the Operating Ratios drill down display 200. Pointing and clicking on the button showing a person's profile will display information by skill mix, as illustrated in skill mix display 500 of Fig. 5. This display 500 shows information for each job title within a unit or department. Worked, paid, and overtime hours, and their representation as a full-time equivalent employee (FTE), are detailed. In addition, the percentage of sick, vacation, holiday, and leave time, called paid time off (PTO), is shown for each job title. In an embodiment, no salary or wage information is displayed at the job title or employee level for confidentiality reasons.

### Aggregate Scorecards

In addition to scorecards for individual departments, several aggregate or rollup scorecards are also provided. These aggregations are done for departments having the same unit of service or primary workload indicator, and for which quality and satisfaction measures are consistent or comparable. These department groupings may be referred to as a division or function. For example, in a hospital environment, all inpatient nursing units, and imaging services, such as diagnostic radiology and ultrasound, may be aggregated into rollup scorecards.

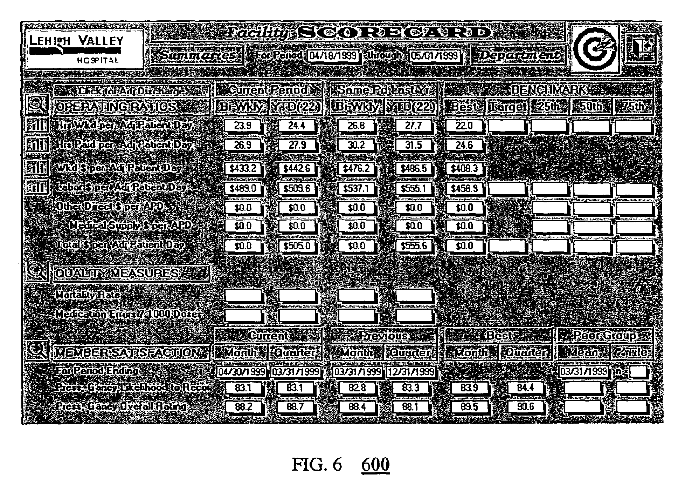

There is also a facility-level scorecard, which aggregates all operational and financial information for the entire hospital, and calculates operating ratios on both a patient discharge and patient day basis. Fig. 6 shows an exemplary main display page for a facility-level scorecard 600. Quality and satisfaction measures are also included at the facility level. The overriding satisfaction indicator, for example, may be the likelihood of recommending facility score from patient satisfaction surveys. The rollup and facility scorecards work exactly the same as for an individual department, including navigation to drill down, trend graph, and tabular chronological displays. The layout of the main display page 600 for rollup and facility scorecards is similar to that of scorecard page 100 for an individual department.

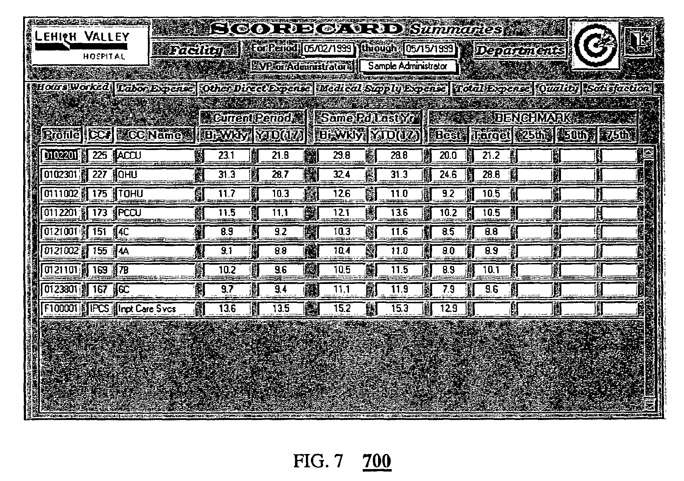

A Summary scorecard is also provided to show multiple departmental scorecard values in a single display, as shown in scorecard display 700 of Fig. 7. This summary provides scorecard information to senior management, vice presidents, and administrators according to the organization chart and chain of command. The Summary scorecard 700 has multiple tabs, with each tab representing a specific set of performance measures. The tabs included on the Summary scorecard 700 are Hours Worked per Unit of Service (UOS), Labor Expense per UOS, Other Direct Expense per UOS, Medical Supply Expense per UOS, Total Expense per UOS, Quality, and Satisfaction. Pointing and clicking on a tab will display that specific performance measure for all departments reporting to the given Vice President or Administrator. The Summary scorecard 700 not only shows individual departments, but also any rollup scorecards available. This rollup is shown on the last line displayed in display 700 of Fig. 7.

The availability of Facility, Summary, and Department scorecards allows the initial scorecard display to vary dependent on the individual's role in the organization when the scorecard application is opened. The scorecard displayed initially also has specific navigation paths to other main scorecard displays. Referring now to Fig. 9, there is shown a flow chart illustrating a preferred navigation scheme 900 used in the scorecard performance assessment system of the present invention. For example, a senior manager, such as the Chief Operating Officer (COO), would initially have the Facility scorecard 600 displayed. Other managers do not even have access to Facility scorecard 600. Alternatively, the senior manager may also open to main display 100 but have access to displays 600, 700. The Facility scorecard 600 not only has the same navigation paths available as an individual department scorecard 100, i.e., to drill-down, graphical, and tabular sub displays, but can also navigate to a summary scorecard 700 for a selected vice president or administrator (i.e. division or intermediate level), or to a selected department scorecard.

An intermediate manager such as a vice president or administrator initially has initially his own Summary scorecard 700 displayed, which also allows navigation to the Facility scorecard 600 or to a selected department scorecard 100. In an embodiment, department managers are not authorized to see another department's scorecard. Accordingly, although a department manager can navigate to the Facility scorecard 600, no navigation to the Summary scorecard 700 will be provided for departmental managers.

### Scorecard Data Update Process

When the balanced scorecard application is opened, a trigger date stored locally on the department manager's PC is compared to a latest update date, for example residing on a network file server. If the date on the file server is more recent that the date stored on the PC, the latest scorecard data is automatically downloaded to the manager's PC. Only data for which a given manager is authorized to see is downloaded. Department managers, for example, cannot see department-level main scorecards 100 for other departments. Authorizations for what a scorecard user can see is preferably based on the organization's chain of command. Vice Presidents, for example, can see all departmental scorecards 100 for which they have responsibility (i.e., all those for cost centers or departments within the VP's division or facility). Senior management is authorized to see all scorecards.

The scorecard data is preferably stored on a network file server central to the business entity, and is updated every two weeks through extraction queries against the organization's data warehouse. The data warehouse is a repository organized from data captured in source, transaction-based systems, such as payroll, patient records, inventory/receiving, and hospital billing. This availability of data will vary by type of organization.

### Balanced Scorecard Application

All three performance indicators-Operating Ratios, Quality Measures, and Member Satisfaction-are included on the main scorecard display 100 so that department managers can not only keep these three interrelated measures in focus at the same time, but also keep them in balance. That is, as a manager takes steps to improve one measure, it is important to ensure there are not any unacceptably negative impacts on other measures. For example, if a manager has a specific initiative to lower the department labor expense per patient visit ratio, he must do so without compromising quality or patient satisfaction, or without lowering these latter measures below acceptable targets.

As will be appreciated, quality measures and member satisfaction are indicators of how *effective* a product or service a given department is providing to its customers. Both of these measures are often thought of collectively as "quality". Operating ratios may be viewed as indicators of how *efficient* a department is in providing its product or service. It is important to balance efficiency and quality because the overall goals of many organizations is not solely to focus on reducing costs, but on success in general, which is affected by profitability or net margin, and costs and efficiency, as well as quality.

The scorecard display 100 may also include various economic measures, such as net margin (the difference of revenues minus costs) for the department. In the field of healthcare, for example, it has traditionally been difficult to distribute reimbursements down to the departmental level. As this difficulty lessens, economic measures can be added to the main scorecard display, along with associated drill-down details, graphical, and tabular chronological displays.

The cost-related operating ratios are specifically used to manage the use of resources, such as staff hours worked, according to the demand for the product or service offered by that department. Referring once more to Fig. 3, trend graph 300 illustrates this point. Where there are large variations between biweekly periods, resources were not being matched to demand. When staff is scheduled according to demand, the peaks and valleys disappear in favor of a flatter line between periods. The objective for all department managers is to flatten and slightly decrease this line over time, while maintaining or improving quality and satisfaction indicators. After each biweekly update of the scorecard data, a department manager can check actual performance against an established target, the department's best (lowest) performance, and benchmarked peer facilities. As demand increases or decreases, e.g. seasonally, the manager varies staffing levels to maintain a specified ratio value. Managers can also use the scorecard data to increase or decrease staff dependent on workload on a daily basis.

Thus, in an embodiment, the balanced scorecard system of the present invention collects raw data related to efficiency and quality, and generates regular reports, based on the raw data, containing interrelated, quantitative efficiency and quality measures indicative of the performance of the cost center during the most recent reporting period. Cumulative information over longer time periods (i.e., multiple successive reporting periods) may be provided, e.g. in trend graph form. In an embodiment, the scorecard reporting period length, e.g. two weeks for biweekly reporting, is selected in accordance with the department manager's decision-making time frame. I.e., a scorecard reporting period is selected so that updated reports are provided often and timely enough to the department manager to permit him to quantitatively assess recent department performance in terms of the interrelated performance measures and to adjust various organizational aspects, in light of this information, to improve efficiency without unacceptably detrimentally affecting subsequent quality measures. For example, in an embodiment, the reporting period is selected to be the same as the pay period. This is a useful period to select because it typically occurs every two weeks or so in a given organization, which thus provides regular and frequent performance reports to the cost center manager, i.e. 26 times per year. Further, various useful "raw" data is already collected on a payroll basis, such as employee attendance data, hours worked per employee for the pay period, and the like. Since employees are important resources related to efficiency and quality, and staffing patterns are one parameter managers can adjust, selecting the scorecard reporting period equal to the pay period for the department permits useful, timely, regular scorecard performance measures to be provided to the manager to permit timely performance assessment.

The scorecard reports are generated every reporting period, with updated raw efficiency and quality-related data. Some of this information may be extracted from conventional transaction-based accounting and other reports. For example, some raw data may be extracted from payroll-related data, such as employee attendance/absenteeism, salary, hours worked, and the like. This and other information may be stored centrally on a network file server central to the business entity, to which the PCs of all cost departments are networked. The network file server can store the raw data only, which PCs regularly download to update their own data, where the scorecard application running on the local PC itself generates scorecard reports based on the raw data. Alternatively, the central file server and associated processing means can store raw data as well as processed performance measures, which are then retrieved by PCs. The centrally-stored raw efficiency and quality-related data can be extracted automatically by the user's PC when the scorecard application is opened, if it is time for such an update, as described above. The central repository of scorecard-related raw data stored on the file server itself may be updated biweekly, by inputting data from various sources in the organization, e.g. from payroll, patient records, inventory/receiving, hospital billing, satisfaction scores from surveys, employee turnover and absenteeism rates as a measure of employee satisfaction, and the like.

### Labor Budget Worksheet

The scorecard techniques of the present invention may also be advantageously incorporated into budget preparation. Thus, using the balanced scorecard system, a department manager does not budget a set number of staff members, but rather budgets according to an operating ratio value. This ratio is multiplied by the projected volume to determine the amount of staff needed to cover the demand. This operating ratio value becomes the ratio target against which biweekly and YTD performance is compared. The target is determined during the budget preparation process, based on organizational goals, comparison to benchmarked peer facilities, and chain-of-command discussions. This is accomplished through the use of the Labor Budget Worksheet, as described in further detail below with reference to Figs. 11-13. The target can also be adjusted, as necessary, during the course of a fiscal year.

In an embodiment, a Labor Budget Worksheet tool is provided to complement the scorecard assessment system of the present invention, to assist managers with budgeting based on an operating ratio. The Labor Budget Worksheet tool may be developed using an application such as MICROSOFT® Excel™, and is illustrated in Figs. 11-13. The Labor Budget Worksheet includes three tabs, or sheets, within an Excel workbook. After opening the workbook, a manager first completes the Input Worksheet 1100, as shown in Fig. 11. This sheet requests cost center metrics, such as the cost center number and name, the unit of service measure and volume, and the projected ratio target for the new fiscal year. Information is also entered for each job title within the cost center, including overtime and paid time off expected by position for the new fiscal year. The manager can only input or change a cell having a double-line box around it.

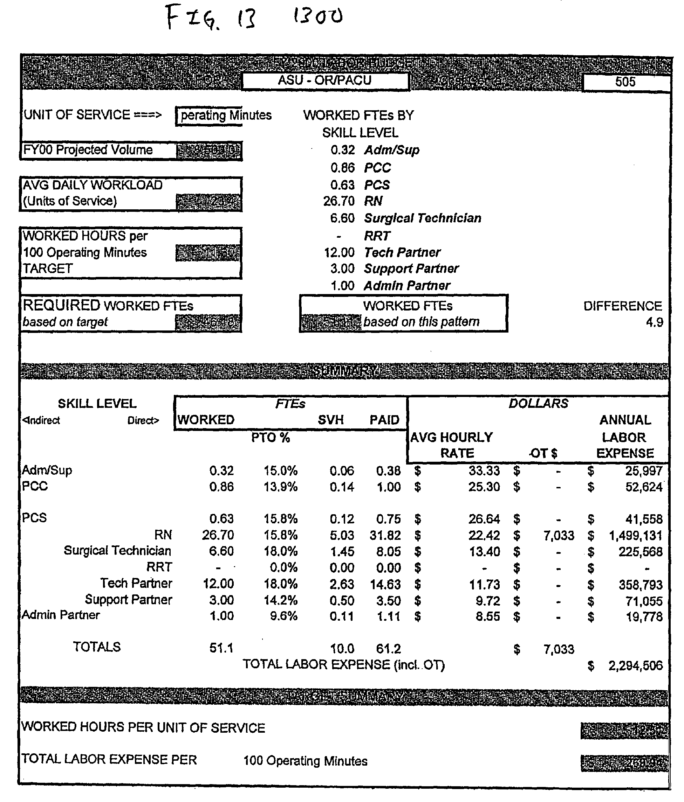

After the Input Worksheet 1100 is completed, the Staffing Pattern sheet 1200, as shown in Fig. 12, is completed. The job title from the Input Worksheet 1100 is automatically displayed on the Staffing Pattern sheet 1200. The manager completes the amount of time each position normally works for each shift in the day and each day of the week. For example, the manager of a cost center having three full-time nurses who work on day shift Monday through Friday would enter 24 hours for each day on the Staffing Pattern sheet 1200.

The final Labor Budget Worksheet tab, as shown in Fig. 13, is the Summary Sheet 1300. This sheet summarizes information entered on the Input Worksheet 1200 and Staffing Pattern sheet 1300. The manager does no entry of information on this sheet. The top of the Summary Sheet 1300 compares the hours worked per unit of service ratio based on the Staffing Pattern against the target ratio entered on the Input Worksheet 1200. The manager makes any necessary revisions to the Staffing Pattern until the two ratio comparisons match. The bottom of the Summary Sheet 1300 is the labor budget itself, reflecting the number of Full Time Equivalent (FTE) employees and the associated labor expenses requested for each job title. This is a representation of matching resources to the expected demand, or projected volume, for the next budgetary period. The two operating ratios associated with the labor budget-hours worked per unit of service and total labor expense per unit of service-shown at the bottom of the Summary Sheet become updated targets in the scorecard when a department's budget is approved.

### Hiring/Replacement Process

The scorecard techniques of the present invention may also be advantageously used in the hiring/replacement process. Thus, the organization may require departments to include their performance measures when submitting requisitions for replacement or additional staff, including temporary or agency staff. A request will only be approved, for example, if the department's YTD performance is at or below its target values for each of the performance measures.

### Advantages & Empirical Results

The use of the scorecard system of the present invention can greatly improve cost center performance, for example as measured by operating ratios. As can been seen from the sample trend display 300 of Fig. 3, in some cases the improvement has been dramatic. Empirical results have shown that, in one case, over 70 percent of some departments have shown significant ratio improvement, without reducing quality and satisfaction measures. Installation of the balanced scorecard system in a large organization, e.g. having over 200 cost centers and about 100 managers, permits the managers to have instant access to their performance data. Using the balanced scorecard system can increase the sophistication of the managers throughout the organization, and helps each department to establish a unit of service or primary workload indicator, allowing for the calculation of operational ratios.

The balanced scorecard system of the present invention thus helps to simplify, standardize, and integrate the management and reporting structures for most operational and financial, quality, and satisfaction measures within an organization, thereby saving time and money while improving outcomes and delivery of service and/or products. Use of such a system helps managers to know, in advance of the beginning of the fiscal year, what their performance expectations are, and to have effectively real-time information on their performance against these expectations. As the year moves forward, they have data on which to base their decisions.

### Alternative Embodiments

The present invention may be used to assess the performance of cost centers for any given company or organization, in any given industry, which has goals such as budgetary, profit/ net margin, and quality or other quantifiable goals, and employees and other resources which must be organized to reach such goals. A cost center may be considered to be a separate department within a larger entity. Alternatively, especially for smaller companies or entities, the entire company may be treated as a cost center.

In alternative embodiments, a modified balanced scorecard system may provide for:
- Conversion of temporary and agency labor from a non-wage expense to be added to the total labor expense for a department;
- Incorporation of labor budget preparation forms into the scorecard, allowing the electronic transfer of this data to the Finance Department for final budget preparation;
- Inclusion of an individual department's contribution, as a percentage, to the organization's overall ratios; in such an embodiment, navigation to the Facility scorecard would be provided to the department managers;
- Statistical process controls, i.e. upper and lower control limits, on trend graphs; and
- Utilization measures, such as average length of stay (ALOS) and inpatient procedures per discharge.

The present invention can also be embodied in the form of computer-implemented processes and apparatuses for practicing those processes. The present invention can also be embodied in the form of computer program code embodied in tangible media, such as floppy diskettes, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted as a propagated computer data or other signal over some transmission or propagation medium, such as over electrical wiring or cabling, through fiber optics, or via electromagnetic radiation, or otherwise embodied in a carrier wave, wherein, when the computer program code is loaded into and executed by a computer, the computer becomes an apparatus for practicing the invention. When implemented on a future general-purpose system-on-chip or microprocessor sufficient to carry out the present invention, the computer program code segments configure the system to create specific logic circuits to carry out the desired process.

It will be understood that various changes in the details, materials, and arrangements of the parts which have been described and illustrated above in order to explain the nature of this invention may be made by those skilled in the art without departing from the principle and scope of the invention as recited in the claims after the following appendix

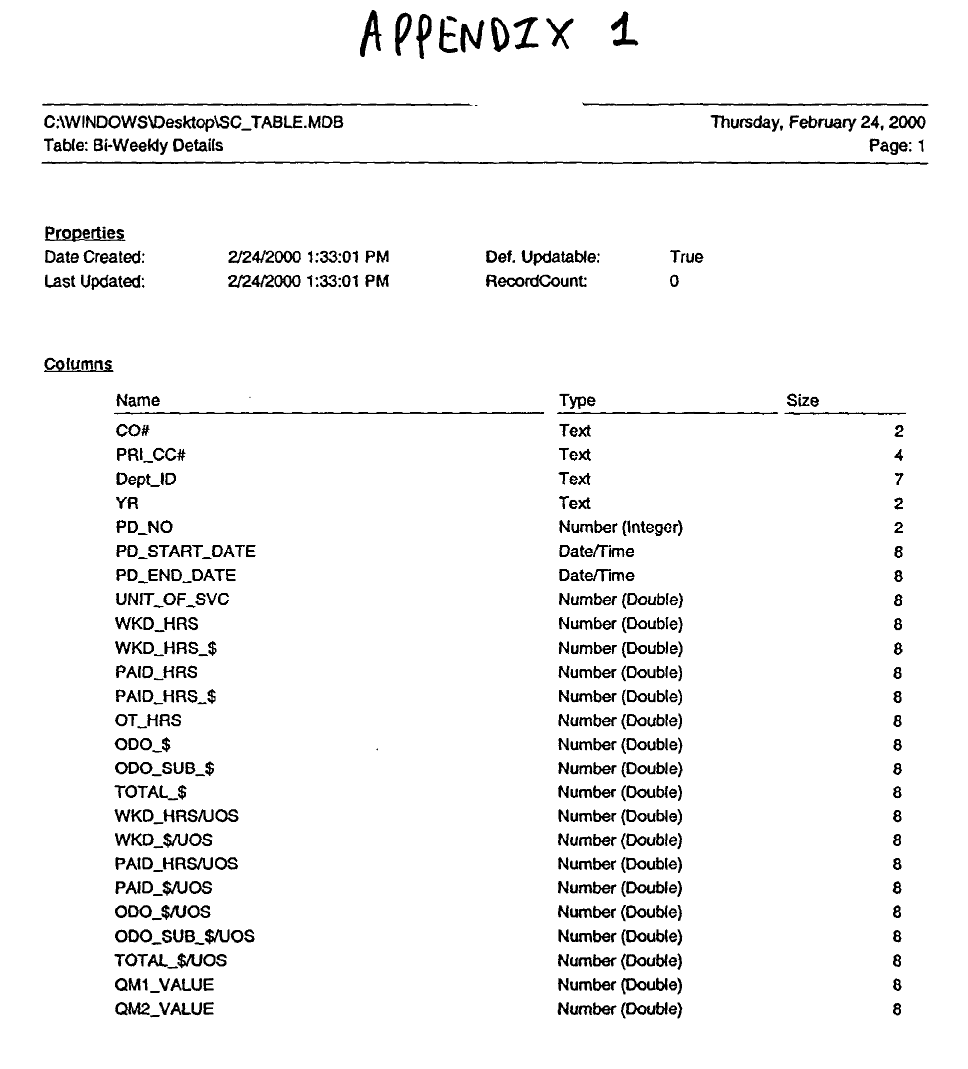

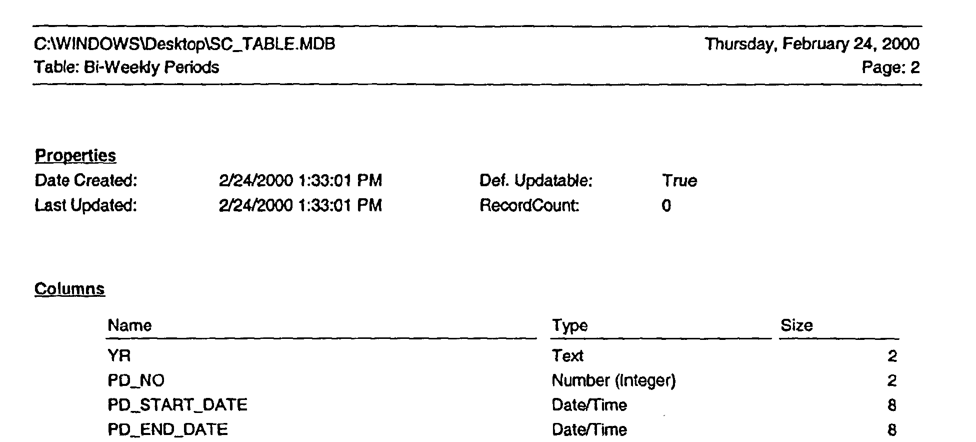

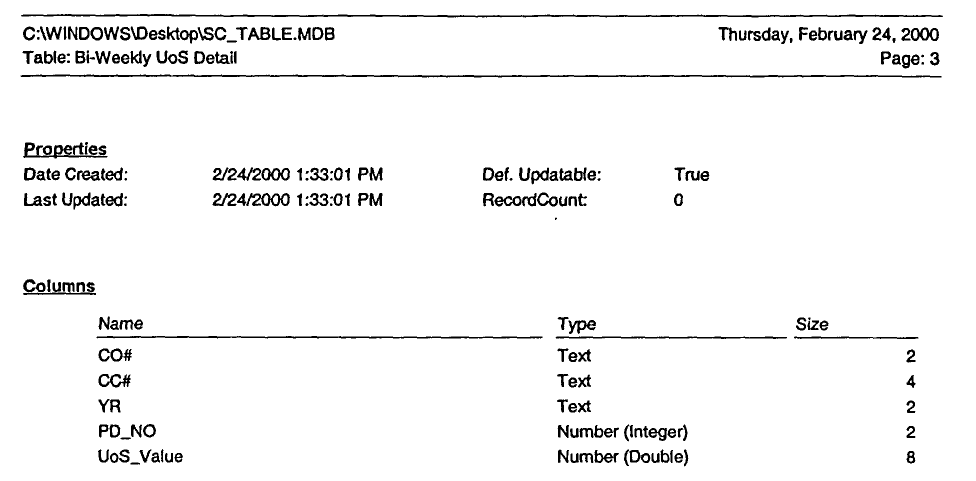

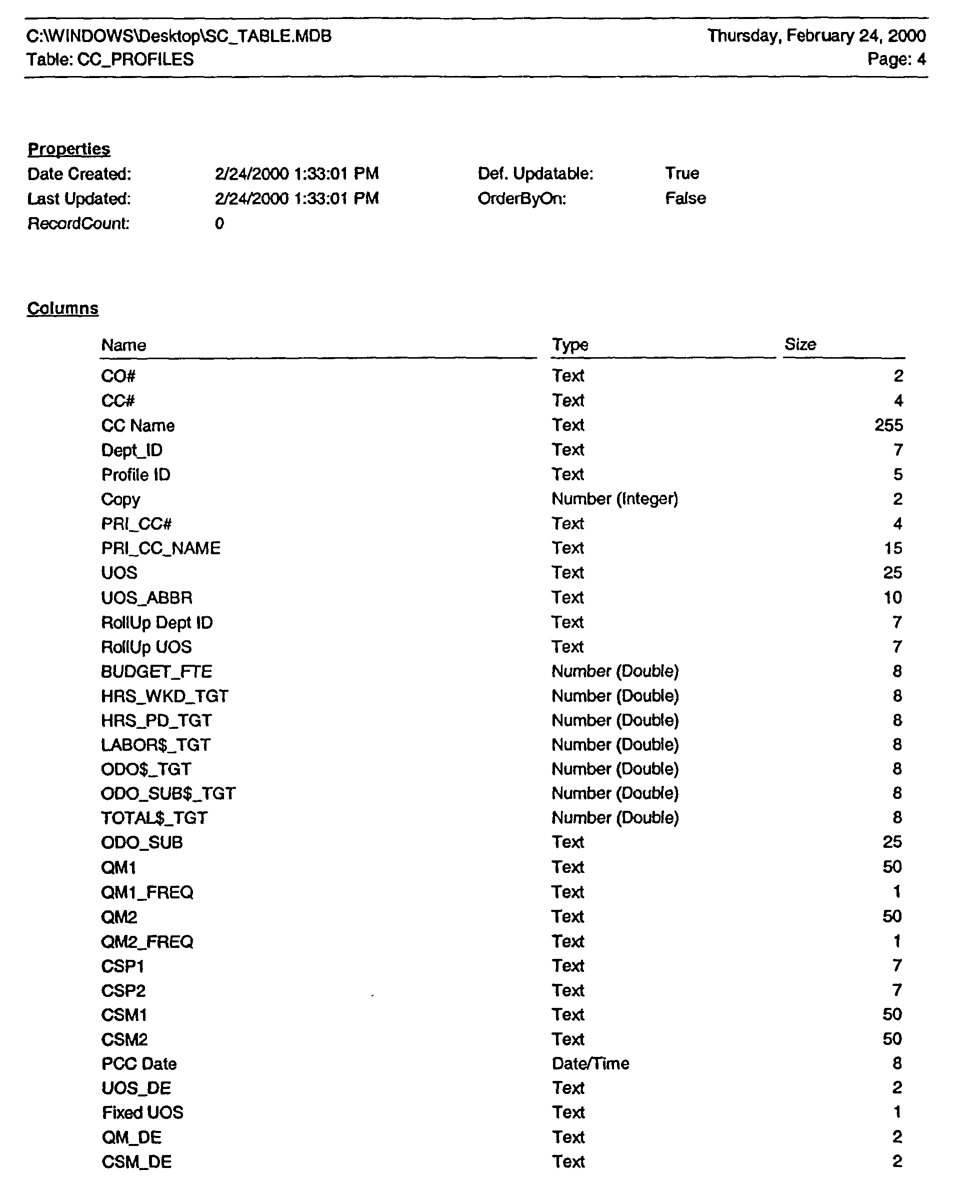

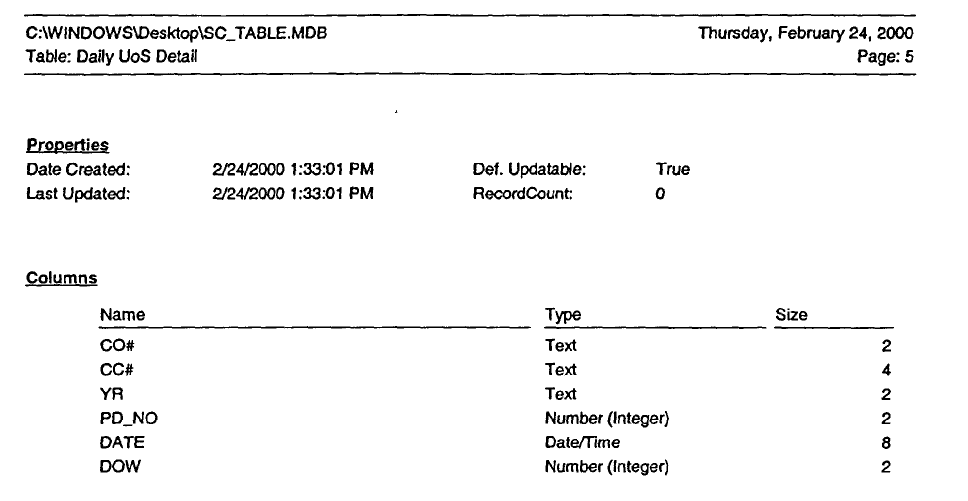

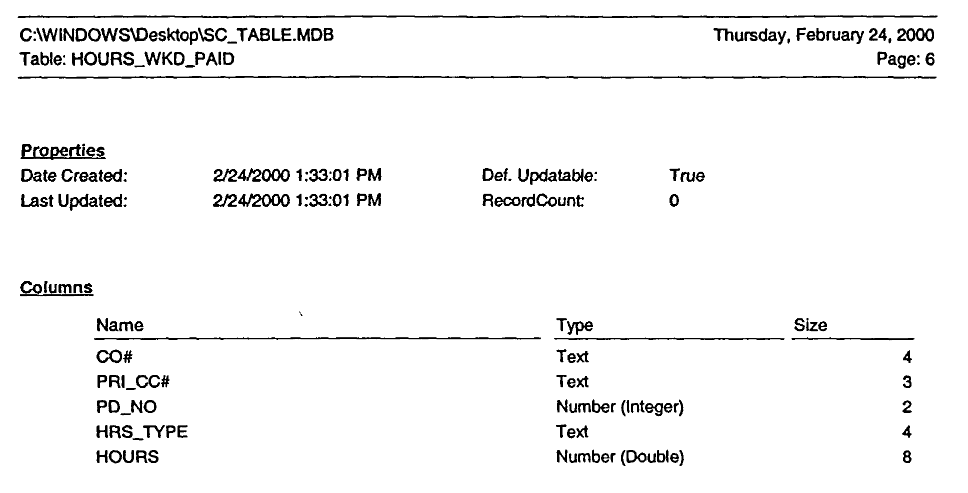

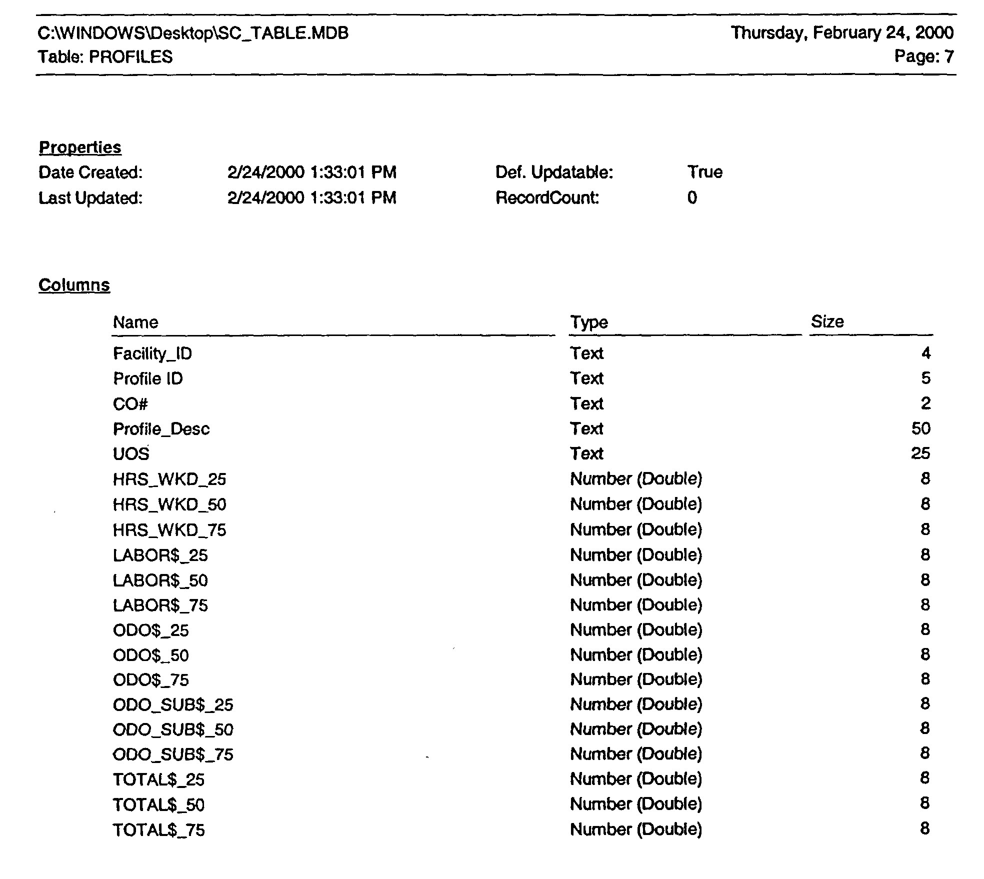

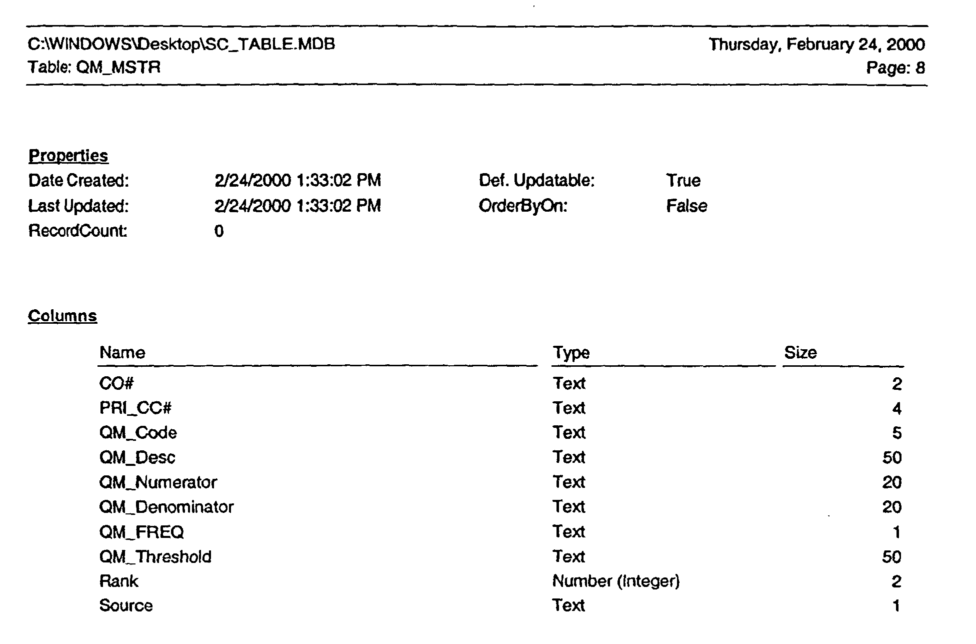

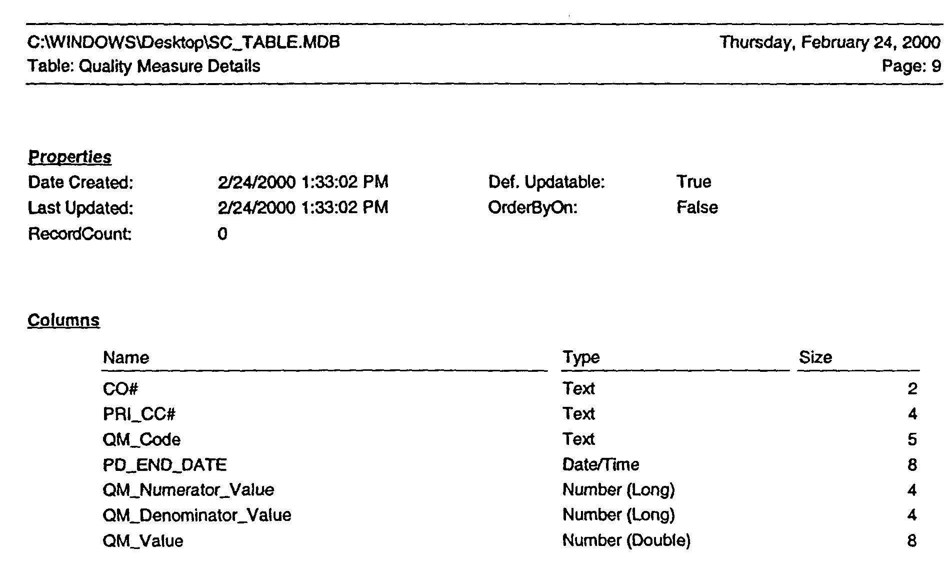

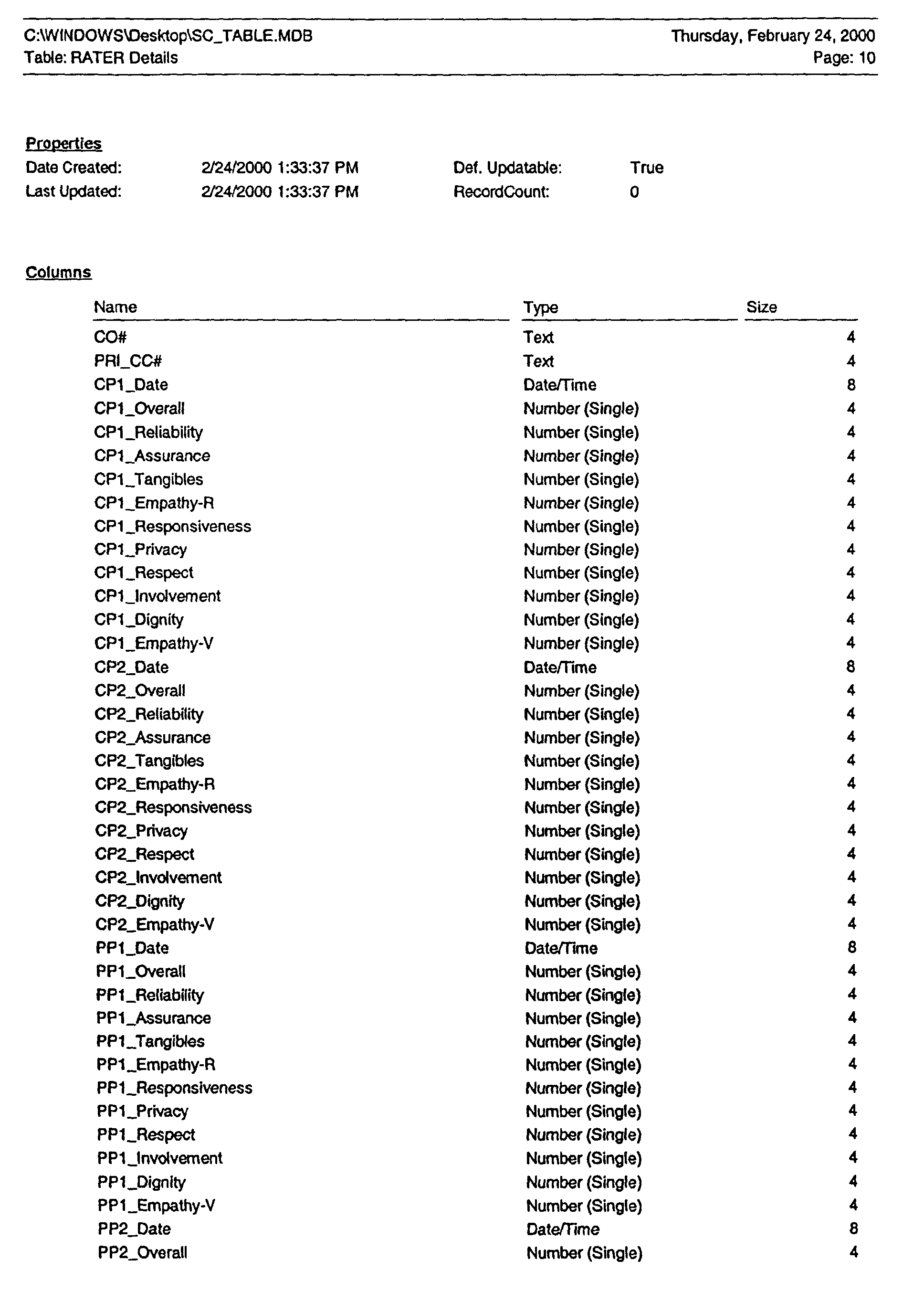

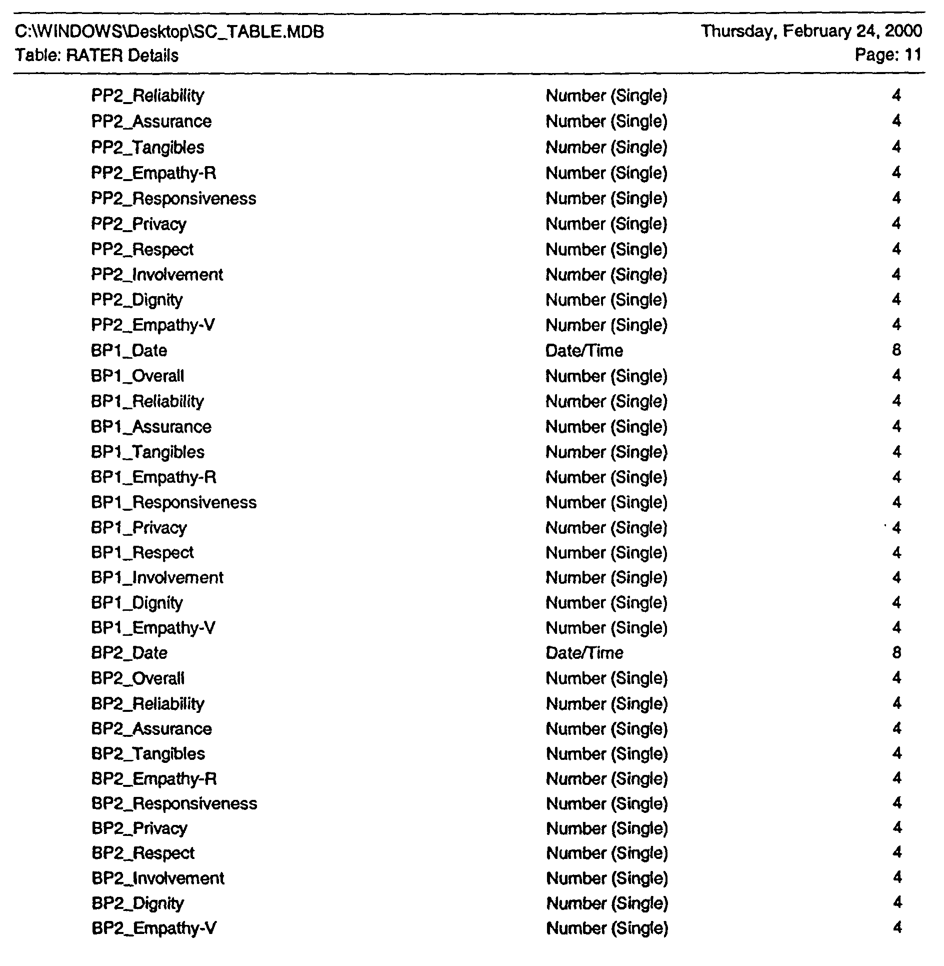

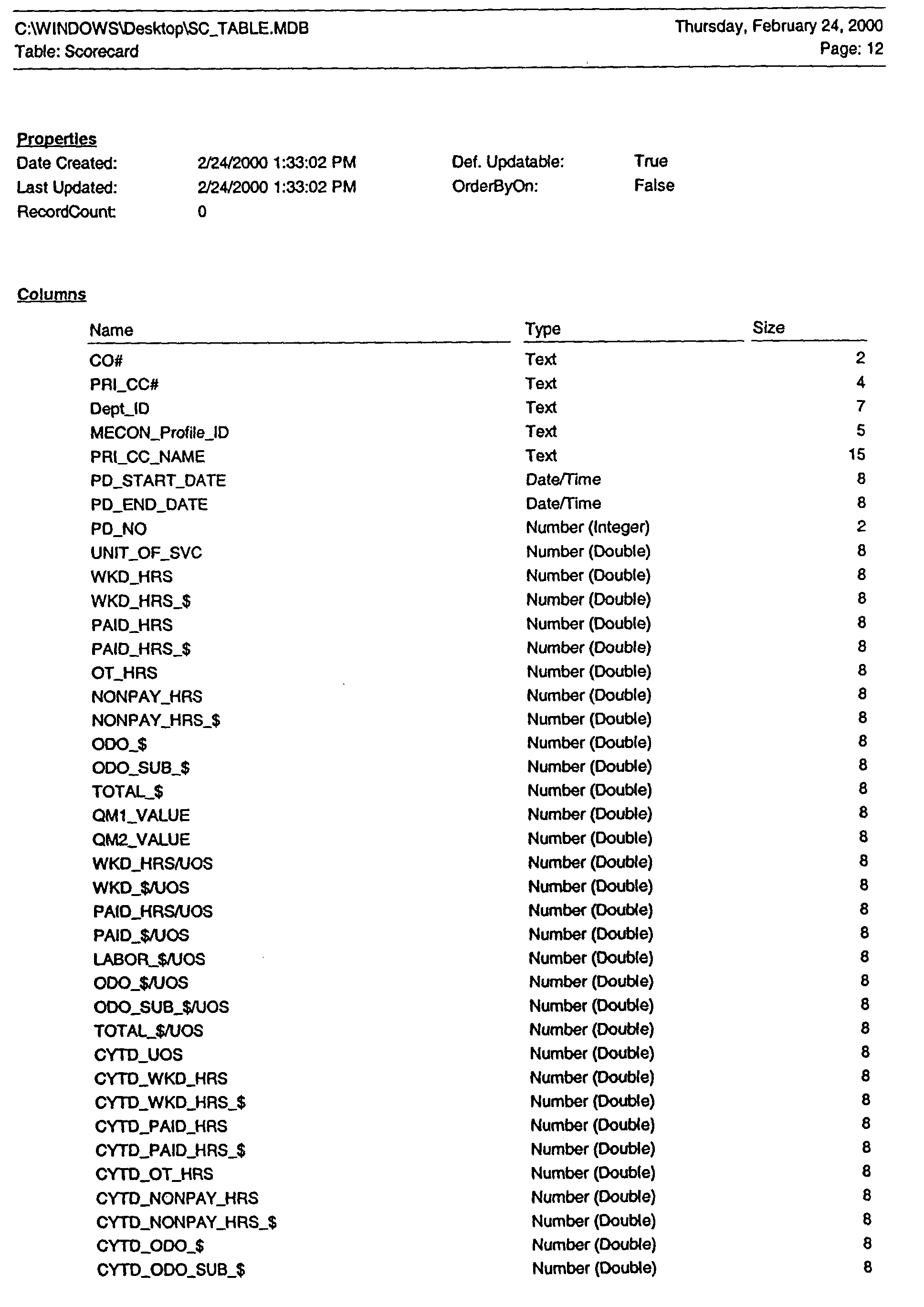

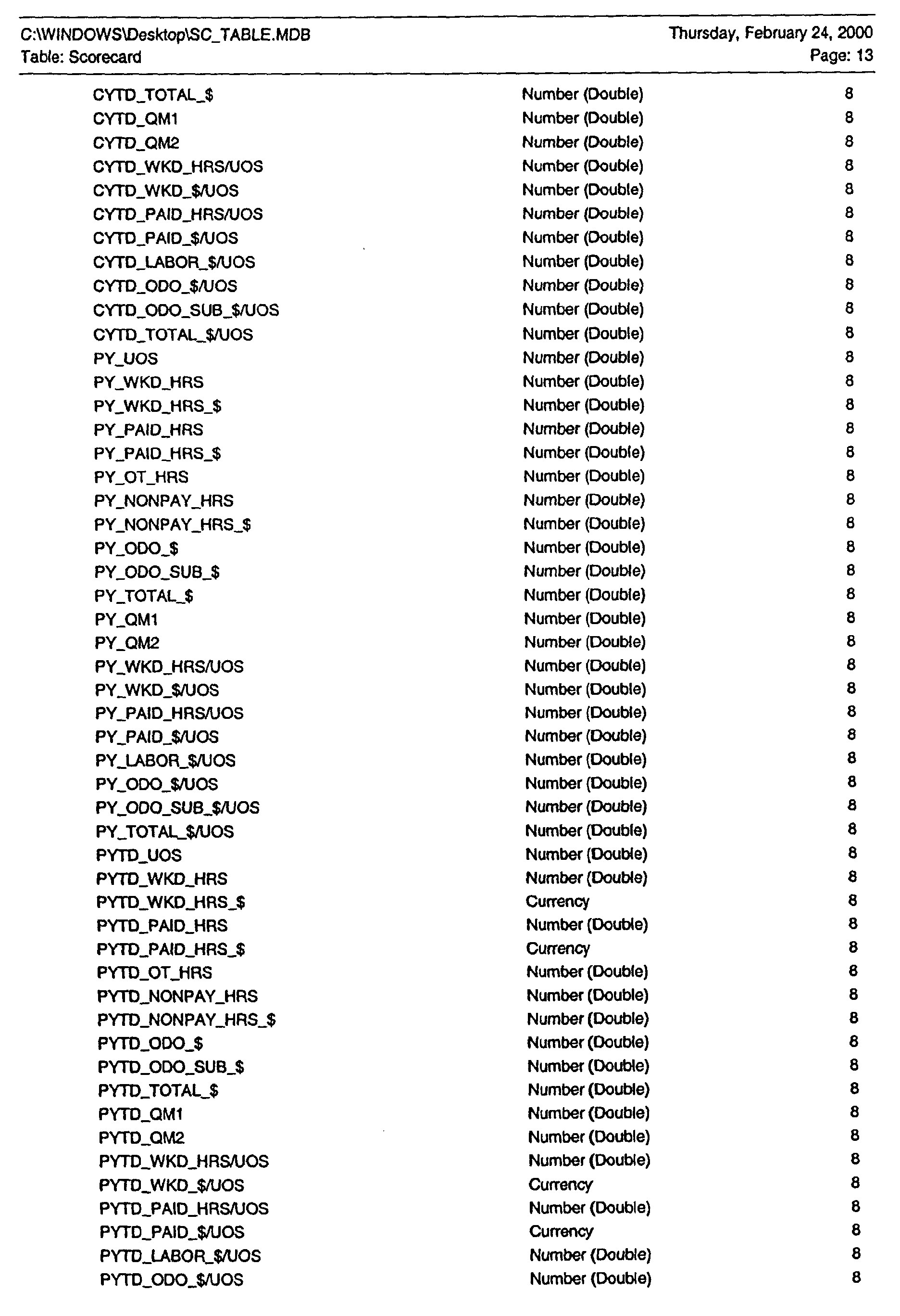

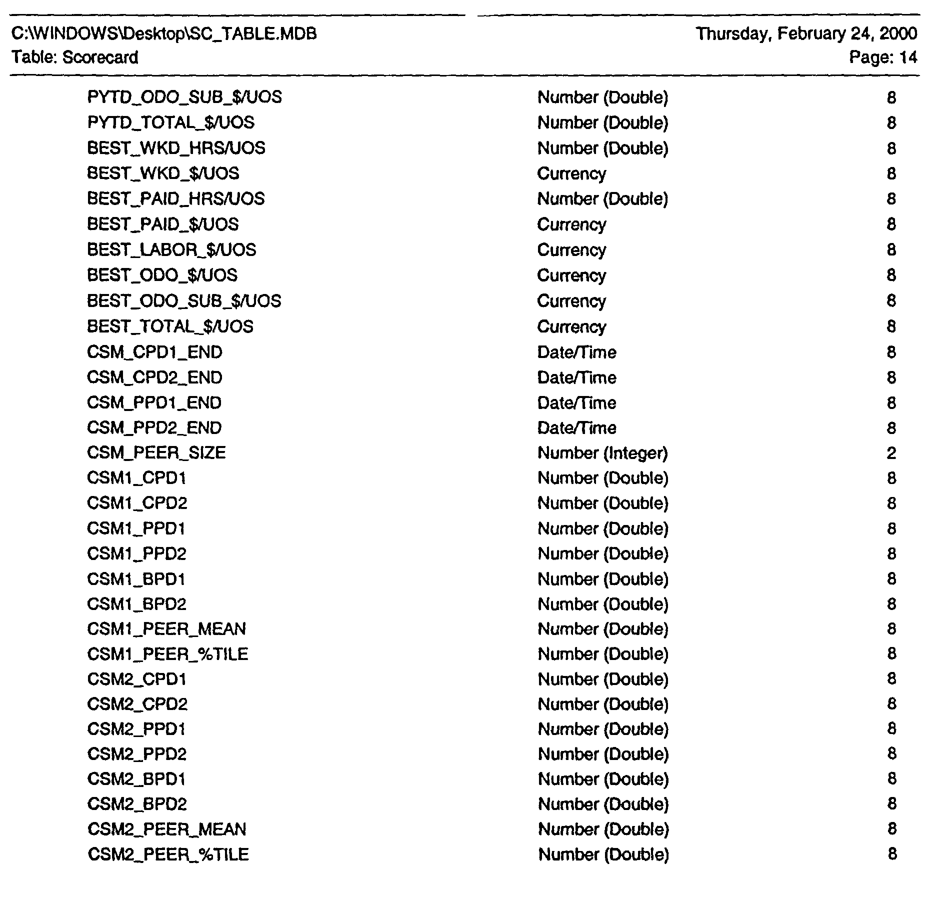

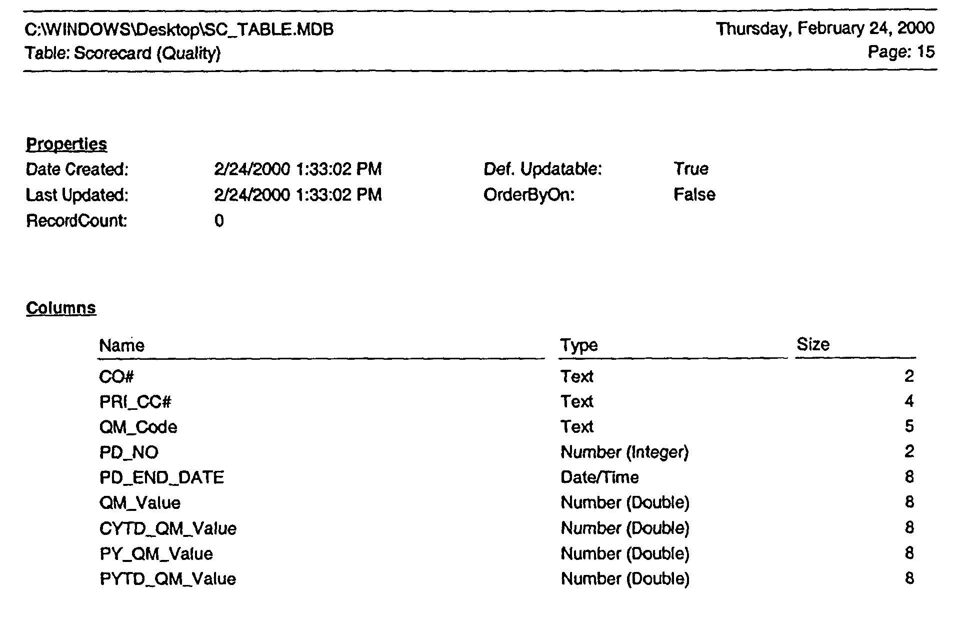

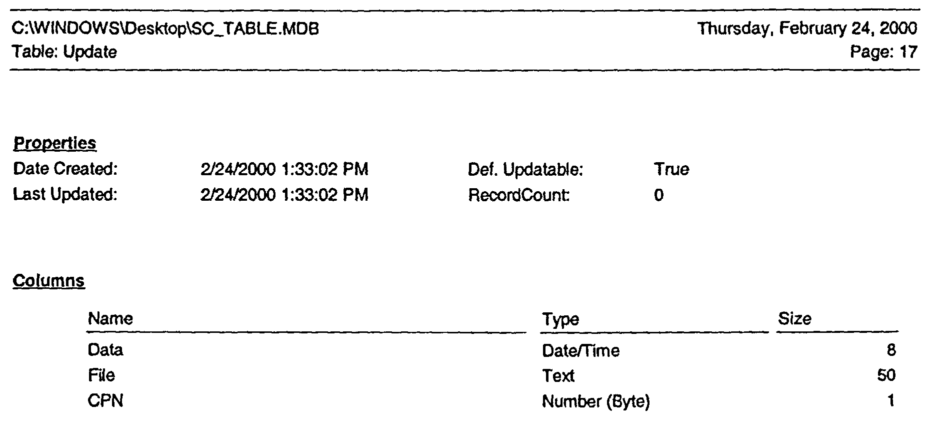

## Claims

1. A computer-based method for monitoring the performance of a cost center of an enterprise, comprising the steps of:
(a) collecting updated raw performance data related to the performance efficiency and quality of the cost center, for each of a plurality of consecutive reporting periods;
(b) generating a scorecard report, for each reporting period, based on the raw data for said each reporting period, said scorecard report containing interrelated, quantitative efficiency and quality performance measures indicative of the performance of the cost center, in terms of efficiency and quality, during the most recent reporting period, said scorecard report further providing at least one benchmark performance measure for each of said performance measures for comparison to the respective performance measure.

2. A method as claimed in claim 1, further comprising the step of preparing a labor budget worksheet, based on operational ratios and benchmarks, to organize said cost center.

3. A computer program element comprising computer program code means to cause a computer to execute procedure to perform the steps of
collecting updated raw performance data related to the performance efficiency and quality of the cost center, for each of a plurality of consecutive reporting periods;
generate a scorecard report, for each reporting period, based on the raw data for said each reporting period, said scorecard report containing interrelated, quantitative efficiency and quality performance measures indicative of the performance of the cost center, in terms of efficiency and quality, during the most recent reporting period, said scorecard report further providing at least one benchmark performance measure for each of said performance measures for comparison to the respective performance measure.

4. A computer program element as claimed in claim 3, wherein the computer program code means causes the computer to perform the further step of preparing a labor budget worksheet, based on operational ratios and benchmarks, to organize said cost center.

5. A computer program element as claimed in either of claims 3 and 4 embodied on a computer readable medium.
